# DEMANDE DE BREVET EUROPEEN

(11) **EP 1 182 601 A1**
(43) Date de publication de la demande: **27.02.2002**
(21) Numéro de dépôt: 01440283.8
(22) Date de dépôt: 23.08.2001
(51) Int. Cl.: G06F 17/60

(54) **Réseau externe d'aide à la vente et au conseil pour des produits et articles**

(30) Priorité: 24.08.2000 FR 0010903
(71) Demandeur: Pharmagest Interactive (Société Anonyme à Directoire et Conseil de Surveillance), 54710 Ludres (FR)
(72) Inventeur: Mathieu, Michel, 54000 Nancy (FR); Gradzik, Dominique, 54140 Jarville la Malgrange (FR); Ponnelle, Vincent, 54000 Nancy (FR)
(74) Mandataire: Nuss, Pierre

(57) **Abrégé**

La présente invention a pour objet un réseau externe d'aide à la vente et au conseil pour des produits et articles comprenant un serveur central et une pluralité de serveurs locaux et constituant chacun avec plusieurs postes clients, autant de réseaux internes, lesdits réseaux locaux internes pouvant être connectés audit serveur central par l'intermédiaire d'une supervoie de télécommunication.

Réseau caractérisé en ce que le serveur central (1) comporte ou contrôle l'accès à une base de données globale (1'), en ce que chaque serveur local (2) comporte une base de données particulière (2') renfermant une partie des informations contenues dans la base de données globale (1'), et en ce que chaque réseau interne local (4) supporte des moyens logiciels, répartis entre le serveur local (2) et les postes clients (3) concernés et qui, en cas de formulation d'une requête de communication d'informations, déterminent la localisation des informations recherchées avant de consulter la base de données particulière (2') du serveur local (2) concerné ou d'établir une communication avec le serveur central (1) en vue d'une consultation de la base de données globale (1') et du rapatriement des informations recueillies, pour leur affichage et/ou édition au niveau du poste client (3) ayant émis la requête ou lancé l'interrogation.

## Description

La présente invention concerne les domaines des télécommunications et de l'informatique, notamment appliqués à la vente et au conseil aux consommateurs, et a pour objet un réseau externe d'aide à la vente et au conseil pour des produits et articles.

Dans de nombreux domaines du commerce de produits et d'articles, il est nécessaire de disposer rapidement, voire quasiment en temps réel, d'informations concernant le produit ou l'objet proposé à la vente.

Lorsque le nombre de produits ou d'articles proposés à la vente est important et/ou lorsque les informations requises sont d'une grande complexité et d'un haut niveau technique, tout en nécessitant une information complète, sûre et fiable, un personnel même très qualifié doit être aidé d'outils de recherche et de consultation pouvant lui fournir le plus rapidement possible une information à jour.

Bien entendu, les outils informatiques actuels se prêtent de manière adéquate à une telle tâche.

Toutefois, lorsque le nombre de références est très élevé (par exemple plusieurs milliers, voire plusieurs dizaine de milliers) et que les données et informations les concernant sont volumineuses, il peut s'avérer très coûteux d'acquérir les moyens de stockage et de gestion adéquats et très fastidieux de les maintenir à jour, notamment pour des petites unités de commerce.

D'un autre côté, l'alternative à la solution précitée, à savoir le stockage à distance centralisé et partagé entre plusieurs utilisateurs ayant les mêmes besoins, de l'ensemble des données et informations précitées, avec une mise à jour unique, présente l'inconvénient de générer systématiquement un délai de réponse non négligeable pour la fourniture de l'information recherchée, titulaire des aléas de la télécommunication, et d'entraîner des coûts de communication importants, soit du fait des coûts unitaires cumulés, les connexions au site de stockage centralisé s'effectuant dans les plages d'horaire d'ouverture des commerces, et donc de facturation à plein tarif, soit du fait du coût élevé d'installation ou de location d'une ligne spécialisée.

Ainsi, le but principal de la présente invention consiste à fournir une solution optimisée au problème exposé ci-dessus.

L'invention recherche, par ailleurs, à fournir une solution pouvant être mise en oeuvre en intégrant ou en association avec des fonctionnalités propres au domaine du commerce et de la vente, ainsi que des fonctionnalités de gestion.

A cet effet, la présente invention a pour objet en un réseau externe comprenant une unité informatique principale formant serveur central et une pluralité d'unités informatiques disséminées formant serveurs locaux et constituant chacun, avec une ou plusieurs unités informatiques secondaires ou postes clients, autant de réseaux internes implantés dans des lieux ou points de vente de produits et d'articles, géographiquement distants les uns des autres, lesdits réseaux locaux internes pouvant être connecter audit serveur central par l'intermédiaire de moyens de télécommunication, notamment par une supervoie de télécommunication, caractérisé en ce que le serveur central comporte ou contrôle l'accès à une base de données globale, renfermant notamment des informations relatives aux produits et articles susceptibles d'être proposés à la vente dans les différents lieux ou points précités, ainsi que des informations complémentaires sur des produits et articles connexes, en ce que chaque serveur local comporte une base de données particulière renfermant une partie des informations contenues dans la base de données globale, déterminée par une évaluation des besoins du lieu ou point de vente considéré et dont le contenu est rafraîchi, complété et/ou modifié à intervalles réguliers et/ou en fonction des interrogations ou requêtes de communication d'informations formulées, successivement, par les opérateurs des différents points et lieux de vente par l'intermédiaire des postes clients et en ce que chaque réseau interne local supporte des moyens logiciels, répartis entre le serveur local et les postes clients concernés et qui, en cas de formulation d'une requête de communication d'informations, déterminent la localisation des informations recherchées avant de consulter la base de données particulière du serveur local concerné ou d'établir une communication avec le serveur central à travers la supervoie de communication en vue d'une consultation de la base de données globale et du rapatriement des informations recueillies, pour leur affichage et/ou édition au niveau du poste client ayant émis la requête ou lancé l'interrogation.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation synoptique représentant schématiquement une partie d'un réseau externe selon l'invention;
la figure 2 est un schéma synoptique de l'architecture générale des moyens logiciels assurant la gestion des fonctionnalités au niveau de réseaux locaux internes faisant partie du réseau externe précité, selon un mode de réalisation particulier et non limitatif de l'invention;
la figure 3 est un schéma synoptique de l'architecture technique globale des moyens logiciels représentés sur la figure 2 ;
la figure 4 est un schéma synoptique de l'architecture technique de la couche "Présentation" faisant partie des moyens logiciels représentés sur les figures 2 et 3 ;
la figure 5 est un schéma synoptique de l'architecture technique de la couche "Métier" faisant partie des moyens logiciels représentés sur les figures 2 et 3, et,
la figure 6 est un schéma synoptique de l'architecture technique des couches "Accès aux Ressources Externes" et "Ressources externes" faisant partie des moyens logiciels représentés sur les figures 2 et 3.

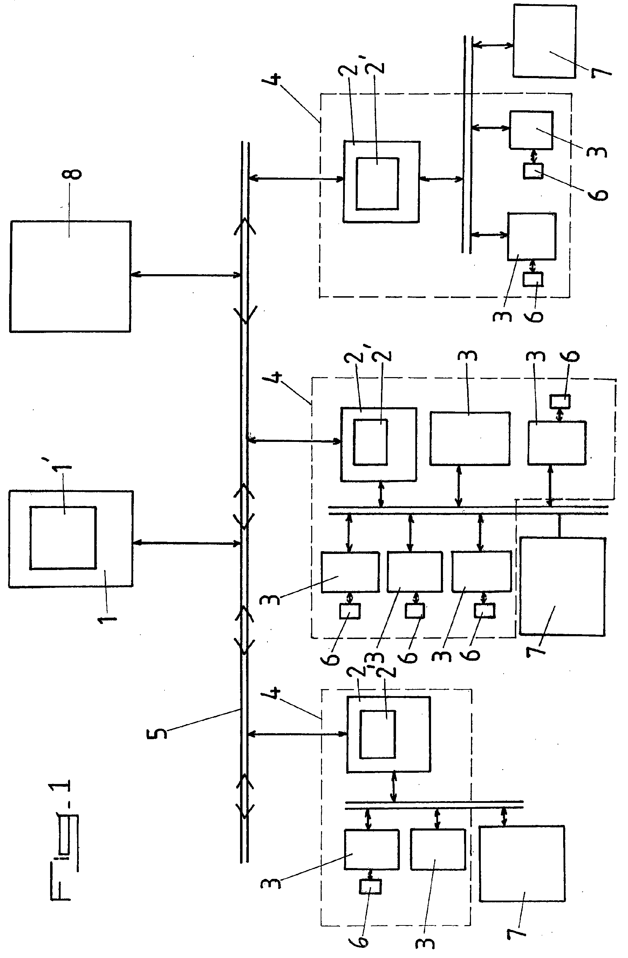

Comme le montre la figure 1 des dessins annexés, le réseau externe comprend une unité informatique principale 1 formant serveur central et une pluralité d'unités informatiques 2 disséminées formant serveurs locaux et constituant chacun, avec une ou plusieurs unités informatiques secondaires 3 ou postes clients, autant de réseaux internes 4 implantés dans des lieux ou points de vente de produits et d'articles, géographiquement distants les uns des autres, lesdits réseaux locaux internes 4 pouvant être connectés audit serveur central 1 par l'intermédiaire de moyens de télécommunication, notamment par une supervoie de télécommunication 5 telle que celle connue sous la désignation "Internet".

Conformément à l'invention, le serveur central 1 comporte ou contrôle l'accès à une base de données globale 1', renfermant notamment des informations relatives aux produits et articles susceptibles d'être proposés à la vente dans les différents lieux ou points précités, ainsi que des informations complémentaires sur des produits et articles connexes. De plus, chaque serveur local 2 comporte une base de données particulière 2' renfermant une partie des informations contenues dans la base de données globale 1', déterminée par une évaluation des besoins du lieu ou point de vente considéré et dont le contenu est rafraîchi, complété et/ou modifié à intervalles réguliers et/ou en fonction des interrogations ou requêtes de communication d'informations formulées, successivement, par les opérateurs des différents points et lieux de vente par l'intermédiaire des postes clients 3. En outre, chaque réseau interne local 4 supporte des moyens logiciels, répartis entre le serveur local et les postes clients 3 concernés et qui, en cas de formulation d'une requête de communication d'informations, déterminent la localisation des informations recherchées avant de consulter la base de données particulière 2' du serveur local 2 concerné ou d'établir une communication avec le serveur central 1 à travers la supervoie de communication en vue d'une consultation de la base de données globale 1' et du rapatriement des informations recueillies, pour leur affichage et/ou édition au niveau du poste client 3 ayant émis la requête ou lancé l'interrogation.

Le contenu de base et la taille de la base de données particulière 2' peuvent soit découler d'études statistiques préalables des besoins des lieux ou points de vente ou de standards définis pour l'ensemble des réseaux locaux connectés, soit être déterminés spécialement en fonction des souhaits particuliers du propriétaire ou de l'exploitant du réseau local considéré.

Selon une première caractéristique de l'invention, les interrogations ou recherches d'informations s'effectuent sur la base d'un nom, d'une désignation technique, d'un code, d'une référence ou d'un paramètre similaire, seul ou en association avec au moins un autre paramètre précité, d'un produit ou article ou d'un fournisseur.

De manière générale, les informations fournies concernant un produit ou article comprennent au moins la ou les désignations dudit produit ou article, sa constitution ou composition, ses caractéristiques, ses propriétés, son mode et ses conditions d'utilisation, son prix de vente et son fabricant et/ou fournisseur, ainsi qu'éventuellement sa représentation et/ou celle de son conditionnement, son délai de mise à disposition, l'indication de produits ou d'articles de substitution et l'indication de liens vers des produits ou articles associés ou pouvant être mis en oeuvre en association ou en complément avec le produit ou article considéré.

Par "liens", on entend dans la présente des références bibliographiques internes ou externes à la base de données particulières ou globales, mais également des signets de liaison en langage hypertexte renvoyant, par exemple, directement vers le fournisseur ou le fabricant du produit ou de l'article concerné pour des informations complémentaires par rapport à celles stockées ou pour passer une commande à ces derniers.

Conformément à un mode de réalisation préféré de l'invention, les contenus des bases de données particulières 2' sont mis à jour, complétés et/ou modifiés de manière automatique, à intervalles réguliers et en dehors des plages de temps d'utilisation normales des réseaux locaux 4 concernés, en fonction des informations consultées prioritairement dans l'intervalle de temps écoulé depuis la phase de mise à jour et/ou de modification précédente et par transmission des nouvelles informations ou des informations complémentaires depuis le serveur central 1 par l'intermédiaire de la supervoie de communication 5.

La transmission en dehors des plages horaires d'ouverture des points ou lieux de vente permet de bénéficier des tarifs de communication les plus bas et de regrouper la totalité des opérations en une unique phase opératoire ininterrompue, limitant sa durée.

Les modifications ultérieures des informations stockées localement, pouvant notamment comprendre la suppression d'informations jamais ou rarement interrogées depuis la dernière ou depuis plusieurs phases de rafraîchissement antérieures, permettent par conséquent de remodeler le contenu des bases de données particulières 2' tout en les maintenant à jour, en transposant la mise à jour effectuée de manière centralisée et systématique au niveau de la base de données globale 1', pour la partie des informations la concernant.

Pour, d'une part, limiter les connexions au serveur central 1 à travers la supervoie 5 et pour, d'autre part, permettre d'afficher le plus rapidement possible les informations requises, les contenus des bases de données particulières 2' sont mis à jour ou rafraîchis de manière automatique, entre deux périodes d'utilisation des postes clients 3, par remplacement total ou partiel des informations relatives aux produits et articles précités susceptibles d'être proposés à la vente, aux éventuels produits complémentaires et aux éventuels produits de substitution par des informations actualisées et/ou complétées provenant de la base de données globale 1' par l'intermédiaire de la supervoie de communication 5, chaque mise à jour pouvant n'affecter que certaines informations ayant fait l'objet d'une réactualisation depuis l'opération de mise à jour précédente.

Ainsi, les contenus des bases de données particulières 2' constitueront des images quasi-instantanées (décalées d'une période d'activité au plus) du contenu de la base de données globale 1' en ce qui concerne les informations pertinentes et actualisées relatives aux produits et articles précités.

En outre, les informations additionnelles éventuelles concernant des possibles produit(s) ou article(s) supplémentaire(s) ou de substitution pourront être modifiées de manière simple en fonction des modifications, des établissements ou des cessions d'éventuels accords commerciaux.

Selon une caractéristique de l'invention, le serveur central 1 comprend des moyens de reroutage et d'établissement d'une communication avec d'autres serveurs sélectionnés ne faisant pas partie du réseau externe, en vue de rechercher une information non disponible au niveau dudit serveur central 1 et de la base de données globale 1' associée à ce dernier.

Ainsi, toute recherche et fourniture d'informations à partir des postes clients 3 est contrôlée par l'intermédiaire du serveur central 1, soit par la mise à disposition locale d'un ensemble d'informations (base de données particulières 2'), soit par la fourniture à distance desdites informations par ledit serveur central 1 ou à travers ce dernier, ces opérations s'effectuant de manière similaire (affichage / instructions) au niveau des postes clients 3.

Afin de faciliter et d'accélérer la prise de commande au niveau des postes clients, tout en garantissant l'identité des acheteurs, au moins certains des postes clients 3 sont reliés à des dispositifs 6 de lecture de cartes magnétiques et/ou à circuit intégré attribuées nominativement aux acheteurs des produits et articles et permettant d'identifier les porteurs desdites cartes, ainsi qu'éventuellement les produits ou articles auxquels ces derniers ont droit ou qui leurs ont été attribués ou prescrits.

Dans le cadre d'une application préférentielle de l'invention, les lieux ou points de vente correspondent à des officines de pharmacie et les produits ou articles consistent en des médicaments, des produits ou articles consistent en des médicaments des produits pharmaceutiques ou parapharmaceutiques, des produits cosmétiques et des produits et articles d'hygiène.

Dans cette application préférentielle, les cartes précitées pourront par exemple correspondre aux cartes dites "Sesam Vitale" distribuées aux bénéficiaires par la Caisse Primaire d'Assurance Maladie (CPAM) française.

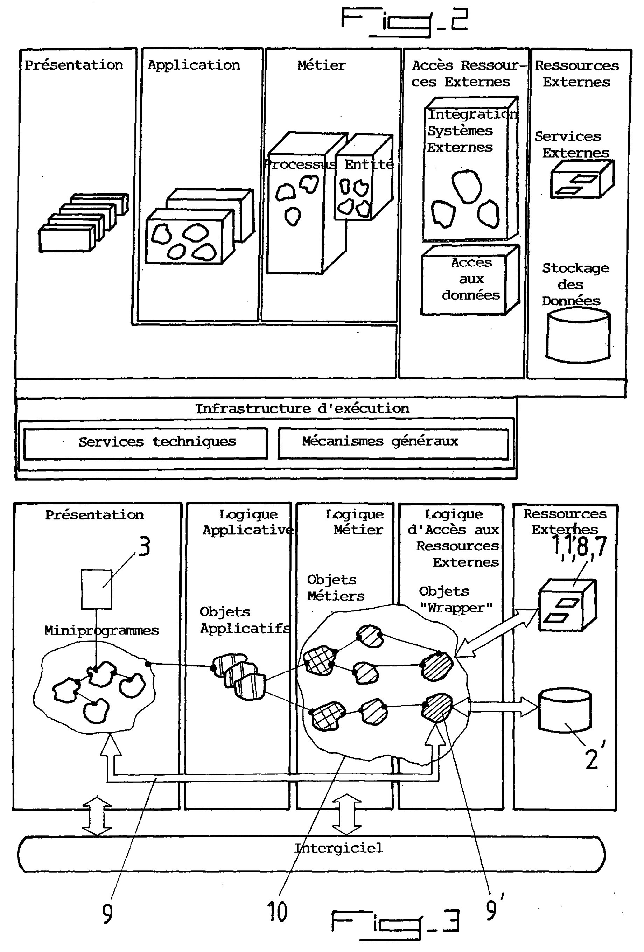

Selon une variante de réalisation particulière et avantageuse de l'invention, représentée notamment aux figures 2 à 6 des dessins annexés, les moyens logiciels réalisant la gestion du fonctionnement de chaque réseau local interne 4 et des périphériques 6, 7 qui lui sont associés, ainsi que l'exécution des requêtes ou interrogations formulées au niveau des postes clients 3, présentent une architecture en couches, comprenant :
a) une couche dite "Présentation", implantée sur les différents postes clients 3, composée de miniprogrammes indépendants et assurant la gestion de l'affichage, de la navigation de l'opérateur dans les différentes fonctionnalités fournies par les moyens logiciels et des opérations basiques sur les contenus des objets des autres couches, la mise en forme des informations et données saisies et à afficher ou éditer au moyen des interfaces homme/machine des postes clients 3,
b) une couche dite "Métiers", supportée par le serveur local 2 et formée d'un premier sous-ensemble de composants "Métier/Processus" fournissant les services nécessaires à la réalisation des opérations demandées par les opérateurs des postes clients 3 et d'un second sous-ensemble de composants "Métier/Entité" assurant le maintien de la cohérence des données au niveau du réseau local 4,
c) une couche dite "Application", implantée sur les différents postes clients 3, formée d'objets sous forme de blocs d'encapsulation en langage orienté objet et constituant des composants de contrôle pour la commande des services de la couche "Métier" précitée, ladite couche assurant la gestion des interactions entre les couches "Présentation" et "Métier",
d) une couche dite "Accès aux Ressources Externes" supportée par le serveur local 2, constituée d'objets sous forme de blocs d'encapsulation en langage orienté objet et formée d'une première sous-couche dite "Intégration des systèmes externes" assurant la gestion des flux de données entrant et sortant du réseau local et l'accès à des services externes, par l'intermédiaire d'interfaces adaptées, en fonction des opérations demandées par les opérateurs des postes clients 3 et d'une seconde sous-couche dite "Accès aux données" comprenant des moyens logiciels spécifiques de communication avec la base de données particulière 2' hébergée par le serveur local et pouvant être directement sollicitée par la couche "Présentation" pour la réalisation de recherches simples et d'opérations basiques sur des informations contenues dans ladite base de données 2' et,
e) une couche dite "Ressources Externes" composée d'une sous couche dite "Stockage des Données" constituée par la base de donnée particulière 2' et d'une sous couche dite "Services Externes" constituée des différents périphériques, systèmes et dispositifs externes aux unités 2, 3 formant le réseau interne local 4 et connectés à ce dernier, ou pouvant être reliés à ce dernier par l'intermédiaire de la supervoie de télécommunication ou d'un autre moyen de transmission.

Une telle structure en couches interactives garantit une grande souplesse d'adaptation de l'invention, à partir d'une structure de base et en fonction de base et de l'application ou des évolutions dans ce dernier.

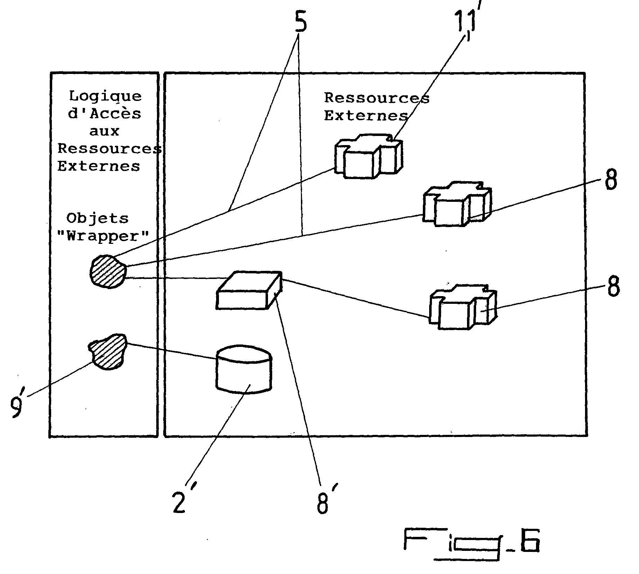

Comme le montre la figure 6 des dessins annexés, les interfaces de la sous-couche "Intégration des systèmes externes" comprennent une interface de mise en communication par l'intermédiaire de la supervoie de télécommunication 5, sollicitée par les logiciels de navigation hébergés par les différents postes clients 3, une interface de transmission / réception de courriers électroniques et des interfaces de liaison du type JNI pour accéder à des bibliothèques à liens dynamiques 8' pour la communication avec des unités informatiques distantes 8 selon des protocoles et des normes de transmission déterminés (par exemple XModem Norme 171) et avec les dispositifs 6 de lecture de cartes associés aux postes clients 3 (branchement sur un port série de ces derniers).

Préférentiellement, l'accès au contenu de la base de données globale 1' associé au serveur central 1, après établissement d'une connexion avec ce dernier par l'intermédiaire de la supervoie de télécommunication 5, s'effectue à travers un portail sécurisé dont la page d'accueil comporte des champs de saisie de données d'identification de l'utilisateur, dont l'évaluation après saisie détermine l'étendue des services fournis par ledit serveur central, accessibles audit utilisateur.

Lorsque les points ou lieux de vente comportent au moins deux niveaux hiérarchiques, et/ou lorsque les unités secondaires ou postes clients 2 doivent restituer à la fois des informations destinées au public ou aux acheteurs et des informations internes à diffusion limitée et, le cas échéant, confidentielles, les postes clients 3 peuvent être divisés en deux groupes, à savoir, d'une part, un premier groupe dont l'utilisation est réservée à un ou plusieurs opérateurs habilité(s) et dont l'unité ou les unités a (ont) accès à la totalité des informations disponibles dans la base de données particulière 2' et, le cas échéant, dans la base de données globale 1', ainsi qu'au progiciel de gestion du lieu ou point de vente (par exemple un logiciel de gestion du type ERP), et, d'autre part, un second groupe dont l'unité ou les unités n'a (ont) accès qu'à une partie prédéfinie des informations contenues dans la base de données particulière 2' considérée, et, le cas échéant, dans la base de données globale 1' et est (sont) chacune généralement reliée(s) à un dispositif 6 de lecture de cartes magnétique et/ou à circuit intégré.

A titre d'exemple de réalisation pratique, mais non limitatif, on décrit ci-dessous une possibilité d'implémentation des moyens logiciels évoqués ci-dessus.

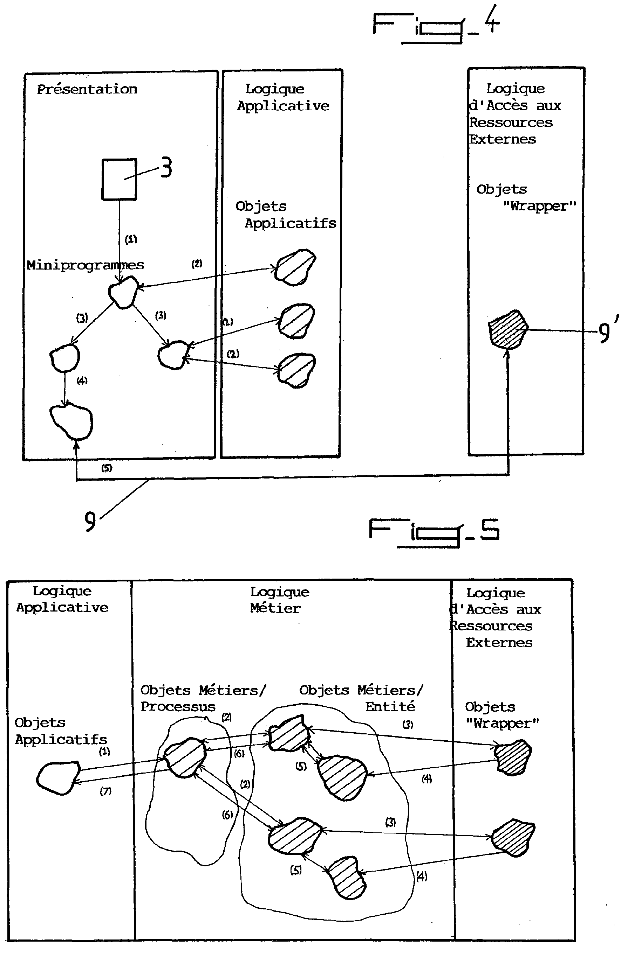

L'architecture générale des moyens logiciels est représentée sur la figure 2 des dessins annexés et lesdits moyens présentent une structure comprenant les couches logicielles décrites ci-après, en relation avec les figures 3 à 6.

Une première couche dénommée « Présentation » est chargée de l'affichage, de l'ordonnancement de la navigation de l'utilisateur en s'assurant du bon enchaînement des écrans et miniprogrammes, de la mise en forme des informations en provenance et/ou à destination de la couche «Application», d'assurer des fonctions CRUD (pour "Créer, Retourner, Actualiser et Détruire" : opérations basiques réalisées sur les données des objets) de base de type 2-tiers sur les objets et de contrôler les données saisies qui ne nécessitent pas la mise en oeuvre de règles lourdes, comme les contrôles syntaxiques.

Une couche dénommée « Application » est chargée de la gestion des interactions entre la couche « Présentation » et une couche dénommée « Métier » et décrite ci-après. Cette couche contient des composants de contrôle qui pilotent les services de la couche « Métier ».

La couche « Métier » est elle-même décomposée en deux sous-ensembles formés chacun d'un type de composants logiciels spécifiques.

Les composants « Métier / Processus » mettent à disposition de la couche « Application » les services nécessaires à la réalisation des opérations demandées par un client. Ces composants sont généralement sans état et peuvent être partagés par plusieurs applications. Ils peuvent également communiquer avec des composants des systèmes existants via la couche "Accès aux Ressources Externes".

Les composants « Métier / Entité » sont chargés du maintien de la cohérence des données du système d'information. Ces composants possèdent généralement un état. Ils peuvent utiliser les services de la couche d'accès aux ressources externes et implémentent les contrôles de cohérence des données manipulées par l'application.

La couche dénommée « Accès aux Ressources Externes » est divisée en deux sous-couches remplissant chacune une fonction spécifique.

La sous-couche « Intégration des systèmes externes » est chargée d'intégrer des services externes accessibles via des protocoles propriétaires en les rendants disponibles via des interfaces adaptées aux besoins de l'application. Il s'agit donc de la gestion des flux migratoires de données entrant et sortant. Dans l'hypothèse où ces flux font l'objet d'une synchronisation avec des événements "Métier", cette couche sera de préférence- pilotée par les objets "Métier".

La sous-couche « Accès aux données » est relative aux systèmes logiciels mis en oeuvre pour communiquer avec la base de données. Une possibilité pour répondre à ce besoin est l'utilisation de la technologie "Business Component" de la société Oracle. A noter également que la technologie précitée est structurée suivant les tables en base de données et non suivant les objets métier, elle répond donc plus à une logique 2-tiers que 3-tiers.

Enfin, une dernière couche dénommée « Ressources Externes », directement associée à la couche précédente, peut également être divisée en deux sous-couches dans le mode la mise en application de l'invention.

La sous-couche « Stockage des données » correspond au composant formée par la base de données particulière 2', en l'occurrence par exemple la base de données relationnelle comme sous la désignation Oracle 8i de la société Oracle.

La sous-couche « Services externes » correspond aux différents services externes à l'application qui peuvent être utilisés pour effectuer des traitements particuliers.

Les différentes couches reposent sur une infrastructure d'exécution offrant à la fois les services techniques (localisation, persistance, sécurité, etc...) nécessaires à la mise en oeuvre des composants et des mécanismes généraux mis à disposition de ces composants.

La gestion des périphériques, tels que les dispositifs de lecture 6 ou les dispositifs d'impression 7, est intégrée au niveau de la couche «Accès aux Ressources Externes», et plus particulièrement dans la sous-couche « Intégration des systèmes externes ».

Les impressions sont gérées depuis un serveur d'impression qui s'inscrit dans la couche « Métier ». L'objet métier correspondant au serveur d'impression accèdera à un objet spécifique de la couche "Intégration des systèmes externes" qui lui pilotera les imprimantes.

L'accès au lecteur ou dispositif de lecture de cartes "Sesam-Vitale" est localisé dans la couche "Intégration des systèmes externes", afin de pouvoir gérer les problèmes de concurrence d'accès à ce périphérique.

A l'aide des figures 3 à 6, on décrira à présent, toujours à titre d'exemple, l'architecture technique des moyens logiciels précités, dont l'infrastructure d'exécution repose sur un outil de développement adapté, par exemple du type connu sous la désignation "Oracle JDevelopper 3.0", pour la réalisation des interfaces homme/machine, des développements et pour la mise en oeuvre et la gestion des composants 9' de la technologie "Business Component", sur une infrastructure particulière 9 dite "Oracle Infobus"pour assurer les fonctions CRUD à partir des interfaces homme/machine et sur la technologie dite "EJB" (pour "Enterprise Java Bean") pour le développement des objets distribués, ainsi que sur le conteneur 10 d'objets distribués connu sous la désignation "Oracle JServer" et sur un système de gestion de base de données adapté, par exemple du type connu sous la désignation "Oracle 8i 8-1-5".

La couche « Présentation » est implantée à l'aide de miniprogrammes (également connus sous la désignation "applets") qui sont démarrés depuis des pages en langage hypertexte HTML statiques. Ces miniprogrammes gèrent et assurent la navigation de l'utilisateur au sein de l'application. Ils dialoguent avec les composants « Application » afin de déclencher des actions métier. Ils dialoguent aussi avec les composants du type "Business Component" de la sous-couche « Accès aux données », via des classes de type "Oracle Infobus" afin de pouvoir effectuer des fonctions de type CRUD 2-tiers sur les objets.

La couche « Application » est implantée à l'aide d'objets en langage de programmation connu sous la désignation Java (un ou plusieurs) instanciés sur les postes client 3. Ces objets encapsulent l'accès aux composants métier. Ils masquent les mécanismes d'instanciation et d'invocation des composants métier. Le but de ces composants est de fournir des services de haut niveau nécessitant l'utilisation de plusieurs objets métiers.

La couche « Métier » est constituée de composants déployés au sein du conteneur « Oracle JServer » 10. Les composants «Métier / Processus» sont implantés sous une forme « EJB Session », accédés depuis les objets Java de la couche « Application ». Les composants « Métier / Entité » peuvent être implantés sous une forme « EJB Entity » ou sous la forme d'objets Java.

La sous-couche « Intégration des Systèmes Externes » de la couche « Accès aux Ressources Externes » est constituée de composants «EJB Session» qui permettent l'accès aux services externes. Les technologies mises en oeuvre pour réaliser ces accès comprennent notamment, JNI (pour "Java Native Interface") pour l'utilisation de bibliothèques à liens dynamiques (DLL) externes (une interface de programmation d'application API Sesam-Vital, une interface de programmation d'application API DataSemp), une interface de programmation d'application API java pour l'accès des sites Internet, le progiciel d'exploitation AWT pour les impressions, le logiciel de courrier électronique dit "JavaMail" pour les échanges avec les organismes CPAM (Caisse Primaire d'Assurance Maladie).

La sous-couche « Accès aux Données » est constituée de composants de type « Business Component ». Ceux-ci organisent directement la sous-couche "Stockage de Données".

La sous-couche « Stockage des Données » de la couche «Ressources Externes » est constituée de la base de données relationnelle «Oracle 8i ».

La sous-couche « Services Externes » est constituée des acteurs externes avec lesquels le réseau interne 4 dialogue. Il s'agit des bibliothèques à liens dynamiques "Sesam-Vital" pour la gestion du lecteur de cartes, des bibliothèques à liens dynamiques "DataSemp" pour l'accès aux informations concernant les produits pharmaceutiques, des imprimantes, des organismes CPAM (via les protocoles connus sous les désignations SMTP, XMODEM), des répartiteurs (via la norme 171) et les sites Internet.

La couche « Présentation » est constituée des éléments suivants : pages HTML, miniprogrammes ("applets") et objets "Oracle Infobus".

Les pages HTML constituent des structures d'accueil pour les miniprogrammes constituant l'application.

Les pages HTML seront déployées sur chaque poste client 3 et les miniprogrammes seront accédés par le navigateur du poste client via une variable du système qui contiendra une référence à des fichiers adoptés sur un répertoire réseau partagé.

Le découpage de l'application en plusieurs miniprogrammes ("applets") fonctionnellement indépendants permet de répartir les temps de chargement sur le poste client, et donc d'améliorer la réactivité de l'application.

Chaque miniprogramme gère en interne une série d'écrans. Les contrôles de validité pour l'enchaînement de ces écrans sont assurés par miniprogramme lui-même, et non par des objets spécifiques qui auraient été déployés dans une couche logicielle de type pilotage de l'application. Cette logique est également valable pour une application de type navigation où les enchaînements de pages sont dynamiques.

De même qu'un miniprogramme gère l'enchaînement de ses écrans, un miniprogramme gère aussi ses enchaînements vers d'autres miniprogrammes. Des contrôles complexes peuvent ainsi être effectués avant de lancer le nouveau miniprogramme. Des messages d'erreurs ou de demande de compléments d'informations peuvent être gérés.

Pour effectuer des actions métier complexes, un miniprogramme s'adresse aux objets de la couche «Application».

Pour effectuer des actions de type CRUD sur des objets, un miniprogramme utilise des objets du framework Oracle Infobus.

Les objets "Oracle Infobus" s'appuient sur une infrastructure qui permet de définir entre autres des objets graphiques qui mappent des objets Business Components qui eux mappent directement des informations de la base de données 2'. Les actions CRUD qui ne nécessitent pas de contrôles complexes peuvent ainsi être effectuées directement depuis un miniprogramme.

Les actions de type CRUD devront être effectuées de façon transactionnelle afin d'assurer à tout instant la cohérence des informations contenues dans la base.

Le schéma d'utilisation des composants de la couche «Présentation» est le suivant (figure 4) :
- L'opérateur du poste client 3 appelle une page HTML.
- La page HTML charge le miniprogramme rattaché à la page (1).
- Le miniprogramme s'exécute, affiche des écrans et effectue des actions de type métier en dialoguant avec un ou plusieurs objets de la couche «Application» (2).
- Lorsque l'utilisateur effectue une action qui nécessite le chargement d'un autre miniprogramme ("applet"), celui-ci est chargé (3) après éventuellement avoir vérifié la cohérence de certaines informations (2).

Dans le cas où le miniprogramme doit effectuer des actions CRUD directement sur la base de données, il peut utiliser des objets Infobus (4) (entre autres des objets graphiques du type InfoSwing) qui s'adressent aux objets Business Components (5) qui eux vont effectuer les actions sur la base de données 2'.

La couche « Application » est constituée d'objets Java qui sont instanciés au niveau des postes clients 3. Ils sont invoqués par les miniprogrammes de la couche « Présentation » et accèdent aux composants dits « EJB Session » chargés de la logique métier.

Les composants de la couche « Application » maintiennent un état constitué de l'ensemble des attributs nécessaires au traitement d'une requête et encapsulent les accès aux composants « Métier » (un ou plusieurs) nécessaires aux services invoqués.

Ils offrent aussi une interface proposant des services de haut niveau sur des composants « Métier » et offrent une interface d'accès à l'état.

Le cycle de vie des objets Java de la couche « Application » est défini comme suit : ils sont instanciés lors de l'invocation de la requête client par le miniprogramme et sont libérés après le traitement de la requête.

Le schéma d'utilisation standard des composants de la couche «Application» est le suivant :
- Le miniprogramme crée une instance du composant.
- Le miniprogramme initialise les propriétés du composant.
- La méthode réalisant l'accès aux composants de la couche "Métiers" et correspondant à l'action désirée est invoquée sur le composant.
- Le miniprogramme exploite le résultat par lecture des propriétés du composant (attributs publics ou méthodes d'accès).
- Le composant peut être libéré.

La couche « Métier » est constituée de différents composants déployés au sein du conteneur « Oracle JServer» qui sont de deux types :
Les composants « Métier / Processus », qui sont implantés sous la forme de composants « EJB Session » accédés depuis les objets Java de la couche « Application ».
Les composants « Métier / Entité », qui sont implantés sous la forme d'objets Java accédés par les composants « EJB Session ».
Les composants « Métier / Processus » sont implantés sous la forme de composants dits "EJB Session Stateless".
Les composants « Métier / Entité » sont implantés sous la forme d'objets Java.
Un composant « Métier / Entité » est en fait décris sous la forme de deux types d'objets Java, l'un étant un objet « Home » qui contient les méthodes de recherche sur des instances contenues dans la base de données et les autres étant des objets de type « contenu » qui représentent chacun une occurrence donnée.

Le schéma d'utilisation des composants Métier est généralement le suivant (voir figure 5) :
- Une méthode d'un composant EJB session « Métier / Processus » est appelée par un objet de la couche « Application » (1).
- Cette méthode effectue des traitements et entre autres effectue des recherches sur des divers objets « Métier / Entité » via les objets Java de type « Home » (2).
- L'appel d'une méthode de recherche sur un objet Java « Métier / Entité » de type « Home » (2) lance l'utilisation d'objets de la couche « Accès aux ressources externes » pour accéder aux données de la base (3).
- Le résultat de la recherche sur l'objet Java de la couche « Accès aux ressources externes » (4) est placé dans une séquence d'objets Java de type « contenu », qui sont renvoyés à l'objet de type « Home» (5).
- La séquence d'objets « contenu » est renvoyée au composant "EJB session" « Métier / Processus » ayant lancé la recherche (6).
- Le composant "EJB session" « Métier / Processus » retourne la séquence d'objets « contenu » au composant de la couche « Application » ayant effectué l'appel (7).

Les services proposés par les objets métier sont transactionnels (ils initient et terminent une transaction). Ainsi, ni la couche "Présentation" ni la couche "Application" n'a en charge de gérer elles-mêmes de transaction à ce niveau.

Les services transactionnels sont implantés au sein d'une méthode unique d'un composant "EJB". Chaque méthode invoquée initialise et termine une transaction. Il est possible de s'appuyer sur les mécanismes transactionnels par défaut du conteneur dit "JServeur", mais il est possible de gérer les transactions manuellement pour un service donné.

Les services non transactionnels sont implantés au sein d'une méthode unique d'un composant "EJB". Ces services peuvent combiner des opérations qui nécessitent des accès transactionnels et des opérations s'exécutant hors contexte transactionnel (communications avec les systèmes existants par exemple).

La couche « Accès aux Ressources Externes » est constituée d'objets Java accessibles par les composants métier déployés au sein du conteneur « JServer ».

Ce sont les seuls composants qui dialoguent avec les ressources externes. Un objet « Métier » désirant dialoguer avec une ressource externe se doit de passer par un objet dit « Wrapper » de la couche précitéé (voir figure 5 et 6) qui lui offre une vision objet de la ressource externe indépendante du protocole d'accès.

Les objets "Wrapper" (pour "emballage") précités permettent, d'une part, d'accéder à la base de donnée particulière 2' (par l'intermédiaire d'un gestionnaire de périphérique adapté) et, d'autre part, d'établir des communications avec le serveur central 1 (via la supervoie de communication 5) et aux diverses unités informatiques 8 d'organismes ou d'entités similaires distantes soit directement à travers la supervoie de communication 5, soit par le biais de bibliothèques à liens dynamiques 8' pour l'échange d'informations, la transmission de feuilles de soins électroniques, etc...

Les erreurs pouvant survenir dans l'exécution des tâches par les moyens logiciels sont transmises au moyen d'exceptions Java. On distingue notamment les exceptions applicatives liées aux erreurs provenant d'une utilisation erronée du système et les exceptions de service liées à l'impossibilité d'exécuter un service.

Le traitement de ces erreurs est bien connu de l'homme de métier et ne nécessite pas d'explications complémentaires.

La présente invention a également pour objet un procédé de recherche et de fourniture automatique d'informations concernant un produit ou un article au niveau d'un poste informatique client 3 d'un réseau interne 4 faisant partie du réseau externe selon l'invention.

Ce procédé consiste essentiellement à saisir une dénomination, une désignation, un code, une référence ou un paramètre ou groupe de paramètres similaire(s) définissant ledit produit ou article au niveau dudit poste client (3), puis à effectuer automatiquement les opérations a), a) et b), a), b) et c) suivantes consistant :
a) à rechercher les informations concernant ledit produit ou article et à les afficher, ces informations comprenant d'éventuelles informations particulières relatives à un ou des produit(s) ou article(s) complémentaire(s) et/ou à un produit ou article de substitution, au niveau dudit poste client 3 lorsque lesdites informations sont disponibles au niveau de la base de données particulière 2' du serveur local concerné ;
b) à établir, si lesdites informations ne sont pas disponibles localement ou seulement partiellement, une communication avec le serveur central 1 par l'intermédiaire de la supervoie de communication 5 et à récupérer au niveau de la base de données globale 1' et à afficher au niveau dudit poste client 3 lesdites informations ;
c) à établir, si lesdites informations ne sont pas disponibles au niveau dudit serveur central 1 ou seulement partiellement, une communication avec un autre serveur ne faisant pas partie dudit réseau externe mais référencé au niveau du serveur central 1, ce à partir dudit serveur central 1 et par l'intermédiaire de ladite supervoie de communication 5, ramener lesdites informations vers le poste client 3 via le serveur central 1 et à les afficher sur ledit poste 3,
   les opérations b) et c) étant éventuellement exécutées après formulation, au niveau du poste client 3 concerné, d'une requête d'obtention d'informations supplémentaires concernant le produit ou l'article concerné.

Dans le cadre de ce procédé, il pourra évidemment être fait appel aux différentes fonctions et fonctionnalités procurées par les moyens décrits précédemment en relation avec le réseau externe objet de l'invention.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Réseau externe comprenant une unité informatique principale formant serveur central et une pluralité d'unités informatiques disséminées formant serveurs locaux et constituant chacun, avec une ou plusieurs unités informatiques secondaires ou postes clients, autant de réseaux internes implantés dans des lieux ou points de vente de produits et d'articles, géographiquement distants les uns des autres, lesdits réseaux locaux internes pouvant être connectés audit serveur central par l'intermédiaire de moyens de télécommunication, notamment par une supervoie de télécommunication, **caractérisé en ce que** le serveur central (1) comporte ou contrôle l'accès à une base de données globale (1'), renfermant notamment des informations relatives aux produits et articles susceptibles d'être proposés à la vente dans les différents lieux ou points précités, ainsi que des informations complémentaires sur des produits et articles connexes, **en ce que** chaque serveur local (2) comporte une base de données particulière (2') renfermant une partie des informations contenues dans la base de données globale (1'), déterminée par une évaluation des besoins du lieu ou point de vente considéré et dont le contenu est rafraîchi, complété et/ou modifié à intervalles réguliers et/ou en fonction des interrogations ou requêtes de communication d'informations formulées, successivement, par les opérateurs des différents points et lieux de vente par l'intermédiaire des postes clients (3) et **en ce que** chaque réseau interne local (4) supporte des moyens logiciels, répartis entre le serveur local (2) et les postes clients (3) concernés et qui, en cas de formulation d'une requête de communication d'informations, déterminent la localisation des informations recherchées avant de consulter la base de données particulière (2') du serveur local (2) concerné ou d'établir une communication avec le serveur central (1) à travers la supervoie de communication en vue d'une consultation de la base de données globale (1') et du rapatriement des informations recueillies, pour leur affichage et/ou édition au niveau du poste client (3) ayant émis la requête ou lancé l'interrogation.

2. Réseau selon la revendication 1, **caractérisé en ce que** les interrogations ou recherches d'informations s'effectuent sur la base d'un nom, d'une désignation technique, d'un code, d'une référence ou d'un paramètre similaire, seul ou en association avec au moins un autre paramètre précité, d'un produit ou article ou d'un fournisseur, et **en ce que** les informations fournies concernant un produit ou article comprennent au moins la ou les désignations dudit produit ou article, sa constitution ou composition, ses caractéristiques, ses propriétés, son mode et ses conditions d'utilisation, son prix de vente et son fabricant et/ou fournisseur, ainsi qu'éventuellement sa représentation et/ou celle de son conditionnement, son délai de mise à disposition, l'indication de produits ou d'articles de substitution et l'indication de liens vers des produits ou articles associés ou pouvant être mis en oeuvre en association ou en complément avec le produit ou article considéré.

3. Réseau selon l'une quelconque des revendications 1 et 2, **caractérisé en ce que** les contenus des bases de données particulières (2') sont mis à jour, complétés et/ou modifiés de manière automatique, à intervalles réguliers et en dehors des plages de temps d'utilisation normales des réseaux locaux (4) concernés, en fonction des informations consultées prioritairement dans l'intervalle de temps écoulé depuis la phase de mise à jour et/ou de modification précédente et par transmission des nouvelles informations ou des informations complémentaires depuis le serveur central (1) par l'intermédiaire de la supervoie de communication (5)

4. Réseau selon l'une quelconque des revendications 1 et 2, **caractérisé en ce que** les contenus des bases de données particulières (2') sont mis à jour ou rafraîchis de manière automatique, entre deux périodes d'utilisation des postes clients (3), par remplacement total ou partiel des informations relatives aux produits et articles précités susceptibles d'être proposés à la vente, aux éventuels produits complémentaires et aux éventuels produits de substitution par des informations actualisées et/ou complétées provenant de la base de données globale (1') par l'intermédiaire de la supervoie de communication (5), chaque mise à jour pouvant n'affecter que certaines informations ayant fait l'objet d'une réactualisation depuis l'opération de mise à jour précédente.

5. Réseau selon l'une quelconque des revendications 1 à 4, **caractérisé en ce que** le serveur central (1) comprend des moyens de reroutage et d'établissement d'une communication avec d'autres serveurs sélectionnés ne faisant pas partie du réseau externe, en vue de rechercher une information non disponible au niveau dudit serveur central (1) et de la base de données globale (1') associée à ce dernier.

6. Réseau selon l'une quelconque des revendications 1 à 5, **caractérisé en ce qu'**au moins certains des postes clients (3) sont reliés à des dispositifs (6) de lecture de cartes magnétiques et/ou à circuit intégré attribuées nominativement aux acheteurs des produits et articles et permettant d'identifier les porteurs desdites cartes, ainsi qu'éventuellement les produits ou articles auxquels ces derniers ont droit ou qui leurs ont été attribués ou prescrits.

7. Réseau selon l'une quelconque des revendications 1 à 6, **caractérisé en ce que** les moyens logiciels réalisant la gestion du fonctionnement de chaque réseau local interne (4) et des périphériques (6, 7) qui lui sont associés, et l'exécution des requêtes ou interrogations formulées au niveau des postes clients(3), présentent une architecture en couches, comprenant :
a) une couche dite "Présentation", implantée sur les différents postes clients (3), composée de miniprogrammes indépendants et assurant la gestion de l'affichage, de la navigation de l'opérateur dans les différentes fonctionnalités fournies par les moyens logiciels et des opérations basiques sur les contenus des objets des autres couches, la mise en forme des informations et données saisies et à afficher ou éditer au moyen des interfaces homme/machine des postes clients (3),
b) une couche dite "Métiers", supportée par le serveur local (2) et formée d'un premier sous-ensemble de composants "Métier/Processus" fournissant les services nécessaires à la réalisation des opérations demandées par les opérateurs des postes clients (3) et d'un second sous-ensemble de composants "Métier/Entité" assurant le maintien de la cohérence des données au niveau du réseau local (4),
c) une couche dite "Application", implantée sur les différents postes clients (3), formée d'objets sous forme de blocs d'encapsulation en langage orienté objet et constituant des composants de contrôle pour la commande des services de la couche "Métier" précitée, ladite couche assurant la gestion des interactions entre les couches "Présentation" et "Métier",
d) une couche dite "Accès aux Ressources Externes" supportée par le serveur local (2), constituée d'objets sous forme de blocs d'encapsulation en langage orienté objet et formée d'une première sous-couche dite "Intégration des systèmes externes" assurant la gestion des flux de données entrant et sortant du réseau local et l'accès à des services externes, par l'intermédiaire d'interfaces adaptées, en fonction des opérations demandées par les opérateurs des postes clients (3) et d'une seconde sous-couche dite "Accès aux données" comprenant des moyens logiciels spécifiques de communication avec la base de données particulière (2') hébergée par le serveur local et pouvant être directement sollicitée par la couche "Présentation" pour la réalisation de recherches simples et d'opérations basiques sur des informations contenues dans ladite base de données (2') et,
e) une couche dite "Ressources Externes" composée d'une sous couche dite "Stockage des Données" constituée par la base de donnée particulière (2') et d'une sous couche dite "Services Externes" constituée des différents périphériques, systèmes et dispositifs externes aux unités (2, 3) formant le réseau interne local (4) et connectés à ce dernier, ou pouvant être reliés à ce dernier par l'intermédiaire de la supervoie de télécommunication ou d'un autre moyen de transmission.

8. Réseau selon la revendication 7 et l'une quelconque des revendications 3 à 5, **caractérisé en ce que** les interfaces de la sous-couche "Intégration des systèmes externes" comprennent une interface de mise en communication par l'intermédiaire de la supervoie de télécommunication (5), sollicitée par les logiciels de navigation hébergés par les différents postes clients, une interface de transmission / réception de courriers électroniques et des interfaces de liaison du type connu sous la désignation JNI pour accéder à des bibliothèques à liens dynamiques (8') pour la communication avec des unités informatiques distantes (8) selon des protocoles et des normes de transmission déterminés et avec les dispositifs (6) de lecture de cartes associés aux postes clients (3).

9. Réseau selon l'une quelconque des revendications 1 à 8, **caractérisé en ce que** l'accès au contenu de la base de données globale (1') associé au serveur central (1), après établissement d'une connexion avec ce dernier par l'intermédiaire de la supervoie de télécommunication (5), s'effectue à travers un portail sécurisé dont la page d'accueil comporte des champs de saisie de données d'identification de l'utilisateur, dont l'évaluation après saisie détermine l'étendue des services fournis par ledit serveur central, accessibles audit utilisateur.

10. Réseau selon l'une quelconque des revendications 1 à 9, **caractérisé en ce que** les postes clients (3) sont divisés en deux groupes, à savoir, d'une part, un premier groupe dont l'utilisation est réservée à un ou plusieurs opérateurs habilité(s) et dont l'unité ou les unités a (ont) accès à la totalité des informations disponibles dans la base de données particulière (2') et, le cas échéant, dans la base de données globale (1'), ainsi qu'au progiciel de gestion du lieu ou point de vente, et, d'autre part, un second groupe dont l'unité ou les unités n'a (ont) accès qu'à une partie prédéfinie des informations contenues dans la base de données particulière (2') considérée, et, le cas échéant, dans la base de données globale (1') et est (sont) chacune généralement reliée(s) à un dispositif (6) de lecture de cartes magnétique et/ou à circuit intégré.

11. Réseau selon l'une quelconque des revendications 1 à 10, **caractérisé en ce que** les lieux ou points de vente correspondent à des officines de pharmacie et **en ce que** les produits ou articles consistent en des médicaments, des produits ou articles consistent en des médicaments des produits pharmaceutiques ou parapharmaceutiques, des produits cosmétiques et des produits et articles d'hygiène.

12. Procédé de recherche et de fourniture automatique d'informations concernant un produit ou un article au niveau d'un poste informatique client d'un réseau interne faisant partie du réseau externe selon l'une quelconque des revendications 1 à 11, **caractérisé en ce qu'**il consiste à saisir une dénomination, une désignation, un code, une référence ou un paramètre ou groupe de paramètres similaire(s) définissant ledit produit ou article au niveau dudit poste client (3), puis à effectuer automatiquement les opérations a), a) et b) ou a), b) et c) suivantes :
a) rechercher les informations concernant ledit produit ou article et les afficher au niveau du poste client (3), ces informations comprenant d'éventuelles informations particulières relatives à un ou des produit(s) ou article(s) complémentaire(s) et/ou à un produit ou article de substitution, lorsque lesdites informations sont disponibles au niveau de la base de données particulière (2') du serveur local concerné ;
b) établir, si lesdites informations ne sont pas disponibles localement ou ne le sont que partiellement, une communication avec le serveur central (1) par l'intermédiaire de la supervoie de communication (5) et récupérer au niveau de la base de données globale (1') et afficher au niveau dudit poste client (3) lesdites informations ;
c) établir, si lesdites informations ne sont pas disponibles au niveau dudit serveur central (1) ou seulement partiellement, une communication avec un autre serveur ne faisant pas partie dudit réseau externe mais référencé au niveau du serveur central (1), ce à partir dudit serveur central (1) et par l'intermédiaire de ladite supervoie de communication (5), ramener lesdites informations vers le poste client (3) via le serveur central (1) et les afficher sur ledit poste 3,
les opérations b) et c) étant éventuellement exécutées après formulation, au niveau du poste client (3) concerné, d'une requête d'obtention d'informations supplémentaires concernant le produit ou l'article concemé.
